# EUROPEAN PATENT APPLICATION

(11) **EP 2 175 179 A1**
(43) Date of publication of application: **14.04.2010**
(21) Application number: 08792186.2
(22) Date of filing: 05.08.2008
(51) Int. Cl.: F16J 15/32

(54) **SEALING DEVICE**

(30) Priority: 10.08.2007 JP 2007209353
(71) Applicant: NOK Corporation, Minato-ku Tokyo 105-8585 (JP)
(72) Inventor: MUNEKATA, Shinobu, Fukushima-shi Fukushima 960-1102 (JP)
(74) Representative: TBK-Patent
(86) International application number: PCT/JP2008/063989
(87) International publication number: WO 2009/022569

(57) **Abstract**

A sealing device for performing sealing by a throw off effect of a slinger (2). The sealing device is provided with a stationary sealing element (1) and the slinger (2) to prevent abrasion of an intimate contact slide section (S2) due to dust, muddy water, etc. and further prevent subsequent degradation of sealing ability of the sealing device caused by the abrasion. The stationary sealing element (1) has a thrust lip (12) and a radial lip (13) located on the inner peripheral side of the thrust lip (12) and is installed on a stationary member (101). The slinger (2) has a sleeve (21) fitted on a rotary member (102) and a flange (22) extending from one end of the sleeve (21). The thrust lip (12) is made to be in intimate slidable contact with the flange (22), and the radial lip (13) is made to be in intimate slidable contact with the outer peripheral surface of the sleeve (21). A circumferentially continuous dam (23) is provided on the outer peripheral surface of the sleeve (21) so as to be positioned on the flange (22) side of the intimate contact slide section (S2) of the radial lip (13). The dam (23) is a ridge (231) or a groove.

## Description

### BACKGROUND OF THE INVENTION

### Field of the Invention

The present invention relates to a sealing device preventing dust, muddy water, etc. from an intrusion into a bearing or the like, and more particularly to a sealing device perfoming sealing by a throw off effect of a slinger.

### Description of the Conventional Art

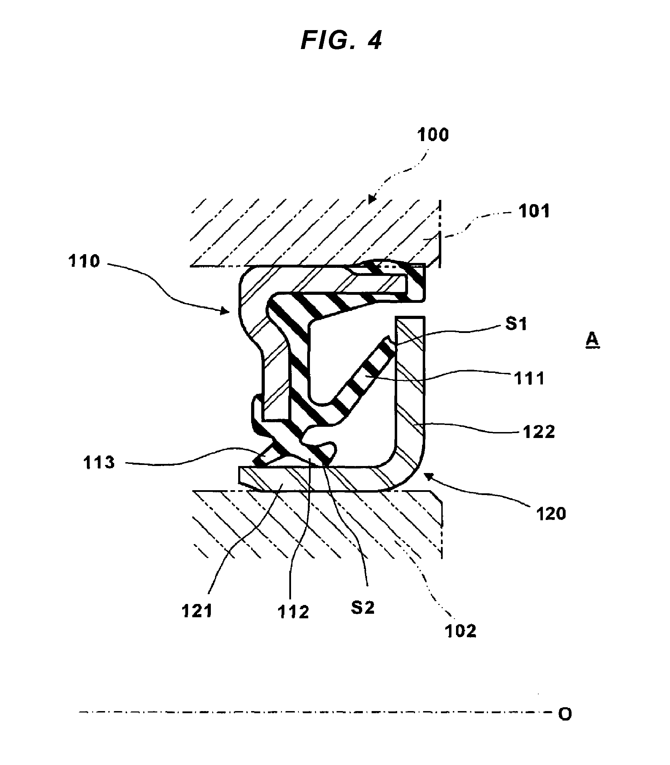

As one kind of a sealing device for sealing a bearing, there is a sealing device having a slinger. Fig. 4 is a half cross sectional view illustrating a typical prior art of this kind of sealing device by cutting along a plane passing through an axis O.

This sealing device is provided, for example, with a stationary sealing element 110 installed to an inner periphery of a non-rotating outer ring 101 in a bearing 100, and a metal slinger 120 having a sleeve 121 fitted to an outer periphery of an inner ring 102, which is a rotation side in the bearing 100, and a flange 122 extending from one end of the sleeve 121. A thrust lip 111 provided in the stationary sealing element 110 is made to be in intimate slidable contact with the flange 122 of the slinger 120, and a radial lip 112 provided in the stationary sealing element 110 so as to be positioned on an inner peripheral side of the thrust lip 111 is made to be intimate slidable contact with an outer peripheral surface of the sleeve 121 of the slinger 120. In this case, reference numeral 113 denotes a grease lip for holding a grease (not illustrated) for lubricating an inner portion of the bearing 100.

In other words, this kind of sealing device is configured to prevent dust, muddy water, etc. from an intrusion from an external space A, by a throw off effect caused by a centrifugal force of the flange 122 integrally rotating with the inner ring 102, in an intimate contact slide section S1 between the flange 122 of the slinger 120 and the thrust lip 111. Further, even when dust, muddy water,etc. slightly passes from the intimate contact slide section S1 to the inner peripheral side thereof, the dust, the muddy water, etc. are sealed in an intimate contact slide section S2 between the sleeve 121 of the slinger 120 and the radial lip 112, and is pushed back to the outer peripheral side of the thrust lip 111 by the throw off effect caused by the centrifugal force of the flange 122 (refer, for example, to patent document 1).
Patent Document 1: Japanese Patent Application Laid-Open No. 10-252762

In the conventional structure, when dust,muddy water, etc. pass from the intimate contact slide section S1 between the flange 122 of the slinger 120 and the thrust lip 111 to the inner peripheral side thereof, the muddy water, etc. is sealed by the intimate contact slide section S2 between the sleeve 121 of the slinger 120 and the radial lip 112, as mentioned above. However, in other words, since this means that dust, muddy water, etc. intervene the intimate contact slide section S2, there is a risk that an abrasion is generated on the radial lip 112 and an outer peripheral surface of the sleeve 121, and a sealing performance is deteriorated.

### SUMMARY OF THE INVENTION

### Problem to be Solved by the Invention

The present invention is made by considering the points mentioned above, and a technical object of the present invention is to prevent an abrasion due to an intervention of dust, muddy water, etc. into an intimate contact slide section and reduction of a sealing performance caused thereby, in a sealing device performing sealing by a throw off effect of a slinger.

### Means for Solving the Problem

As a means for effectively solving the technical object mentioned above, in accordance with the present invention, a sealing device includes:
a stationary sealing element including a thrust lip and a radial lip on the inner peripheral side of the thrust lip, and attached to a stationary member, and
a slinger including a sleeve fitted to a rotary member and a flange extending from one end of the sleeve ,
where the thrust lip is made to be in intimate slidable contact with the flange and the radial lip is made to be in intimate slidable contact with an outer peripheral surface of the sleeve.

The sealing device further includes a dam provided on an outer peripheral surface of the sleeve, where the dam is positioned more on the flange side than an intimate contact slide section of the radial lip, and is continuous in a circumferential direction. The dam is a ridge, a groove, or a step which is relatively higher in a diametrical direction in an intimate contact slide section side of the radial lip.

### Effect of the Invention

In accordance with the sealing device of the present invention, since the dam is provided on the outer peripheral surface of the sleeve in the slinger, where the dam is positioned more on the flange side than the intimate contact slide section of the radial lip, and is continuous in the circumferential direction, even if a part of dust or muddy water to be sealed passes from the intimate contact slide section between the flange of the slinger and the thrust lip to its inner peripheral side, the dust, the muddy water, etc. are dammed by the dam, so that these can not intervene the intimate contact slide section between the sleeve and the radial lip. Further, the dust, the muddy water, etc. are discharged to the outer peripheral side of the thrust lip by a throw off effect of the flange. Accordingly, it is possible to effectively prevent an early abrasion of the intimate contact slide section between the sleeve and the radial lip, and a deterioration of a sealing performance generated thereby.

### BRIEF EXPLANATION OF DRAWINGS

Fig. 1 is a half cross sectional view illustrating a first embodiment of a sealing device in accordance with the present invention by cutting along a plane passing through an axis O.
Fig. 2 is a half cross sectional view illustrating a second embodiment of the sealing device in accordance with the present invention by cutting along a plane passing through an axis O.
Fig. 3 is a half cross sectional view illustrating a third embodiment of the sealing device in accordance with the present invention by cutting along a plane passing through an axis O.
Fig. 4 is a half cross sectional view illustrating a typical prior art of a sealing device by cutting along a plane passing through an axis O.

### Description of Reference Numerals

- 1: stationary sealing element
- 11: attaching ring
- 12: thrust lip
- 13: radial lip
- 14: grease lip
- 2: slinger
- 21: sleeve
- 22: flange
- 23: dam
- 231: ridge
- 232: groove
- 233: step
- 101: outer ring (stationary member)
- 102: inner ring (rotary member)
- A: external space
- B: bearing inner portion
- S1, S2: intimate contact slide section

### DETAILED DESCRIPTION OF PREFERRED EMBODIMENT

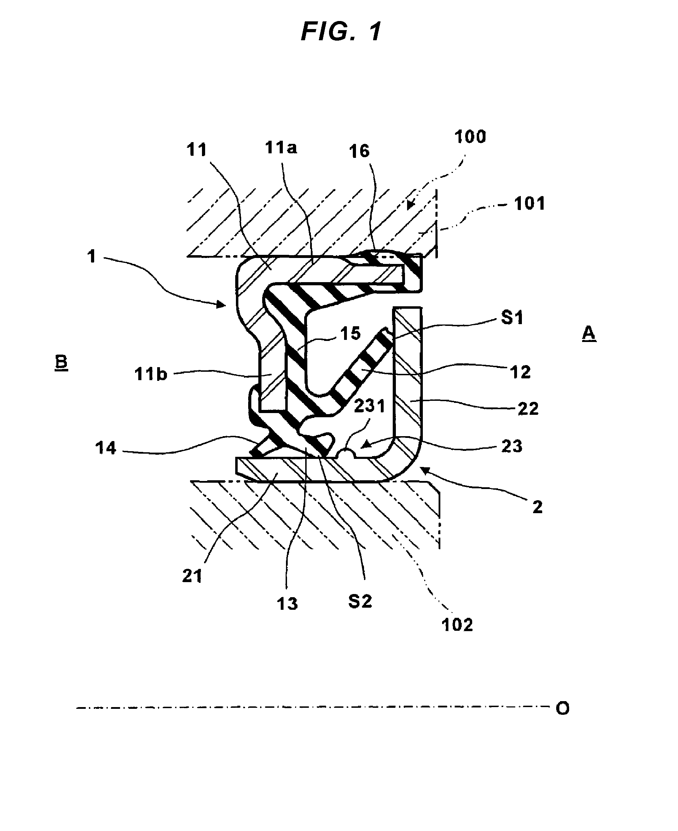

A description will be given below of a preferable embodiment of a sealing device in accordance with the present invention with reference to the accompanying drawings. Fig. 1 is a half cross sectional view illustrating a first embodiment of a sealing device in accordance with the present invention by cutting along a plane passing through an axis O.

The sealing device in accordance with the first embodiment illustrated in Fig. 1 includes a stationary sealing element 1 attached to an inner periphery of an outer ring 101 of a bearing 100, and a slinger 2 attached to an outer periphery of an inner ring 102 of the bearing 100. In this case, the outer ring 101 corresponds to a stationary member described in claim 1, and the inner ring 102 corresponds to a rotary member described in claim 1.

The stationary sealing element 1 includes a metal attaching ring 11, and a thrust lip 12, a radial lip 13, and a grease lip 14 which are integrally formed by a rubber-like elastic material in this attaching ring 11.

The attaching ring 11 includes a cylindrical outer peripheral pressure insertion portion 11a which is pressed in and fitted to an inner peripheral surface of the outer ring 101 of the bearing 100, and an inward flange 11b which extends from an end portion of a bearing inner portion B side of the outer peripheral pressure insertion portion 11a to an inner peripheral side. The thrust lip 12 extends so as to form a conical tubular shape in which a leading end becomes larger in diameter toward an external space A, from a base portion elastic layer 15 which is made of a rubber-like elastic material and formed on the inward flange 11b of the attaching ring 11. The radial lip 13 is positioned in an inner peripheral side of the thrust lip 12 and extends so as to form a conical tubular shape in which a leading end becomes smaller in diameter toward the external space A from an inner peripheral end portion of the base portion elastic layer 15. The grease lip 14 is positioned more on the bearing inner portion B side than the radial lip 13, and extends so as to form a conical tubular shape in which a leading end becomes smaller in diameter toward a bearing inner portion B side. Further, a part of the base portion elastic layer 15 goes around an end surface outer peripheral portion directed to the external space A side of the outer peripheral pressure insertion portion 11a in the attaching ring 11, and forms an outer peripheral seal portion 16 made to be in intimate contact with an inner peripheral surface of the outer ring 101.

The slinger 2 is manufactured by press working a metal plate, or the like, and has a sleeve 21 which is pressed in and fitted to an outer peripheral surface of the inner ring 102 of the bearing 100, and a flange 22 which extends like a disc shape to an outer peripheral side from an end portion of the bearing external space A side of the sleeve 21. The thrust lip 12 in the stationary sealing element 1 is structured such that a whole periphery in a leading end portion comes to be in intimate slidable contact with an inner side surface of the flange 22 in the slinger 2, thereby configuring an intimate contact slide section S1. The radial lip 13 is structured such that a whole periphery of an inner peripheral edge portion in the vicinity of a leading end comes to be in intimate slidable contact with an outer peripheral surface of the sleeve 21 in the slinger 2, thereby configuring an intimate contact slide section S2.

A dam 23 is provided at an outer peripheral surface of the sleeve 21 in the slinger 2. The dam is positioned more on the flange 22 side than the intimate contact slide section S2 of the radial lip 13, and formed by a ridge 231 being continuous in a circumferential direction.

The sealing device in accordance with the first embodiment configured as mentioned above is structured so as to prevent dust, muddy water, etc. coming flying from the external space A and invading by a throw off effect of the flange 22 caused by a centrifugal force, in the intimate contact slide section S1 between the flange 22 of the slinger 2 integrally rotating with the inner ring 102 of the bearing 100 and the thrust lip 12 of the non-rotating stationary sealing element 1. The slinger 2 integrally rotates with the inner ring 102 of the bearing. The non-rotating stationary sealing element 1 is attached to the outer ring 101 of the bearing 100. The sealing device includes the grease lip 14 for holding and sealing a grease which is filled in the bearing inner portion B for lubricating.

Further, the intimate contact slide section S2 between the sleeve 21 of the slinger 2 and the radial lip 13 is structured so as to prevent dust, muddy water,etc. slightly passing from the intimate contact slide section S1 between the flange 22 of the slinger 2 and the thrust lip 12 to an inner peripheral side thereof and permeating into the bearing inner portion B. However, in accordance with the embodiment illustrated in Fig. 1, the dust, the muddy water, etc. slightly passing from the intimate contact slide section S1 between the flange 22 and the thrust lip 12 to the inner peripheral side thereof is dammed by the dam 23 configured by the ridge 231 which is continuous in the circumferential direction, before reaching the intimate contact slide section S2 between the sleeve 21 and the radial lip 13. Further, the dust, the muddy water, etc. dammed by the dam 23 is after all discharged from the intimate contact slide section S1 of the thrust lip 12 to the outer peripheral side thereof, by the throw off effect caused by the centrifugal force of the flange 22.

Accordingly, even if a part of the dust or the muddy water to be sealed passes from the intimate contact slide section S1 between the flange 22 and the thrust lip 12 to the inner peripheral side of the intimate contact slide section S1, it is possible to inhibit the dust, the muddy water, etc. from intervening the intimate contact slide section S2 between the sleeve 21 and the radial lip 13. Thus, it is possible to effectively prevent an early abrasion of an inner peripheral surface of the radial lip 13 and an outer peripheral surface of the sleeve 21 peripherally provided therein, and a deterioration of a sealing performance caused thereby.

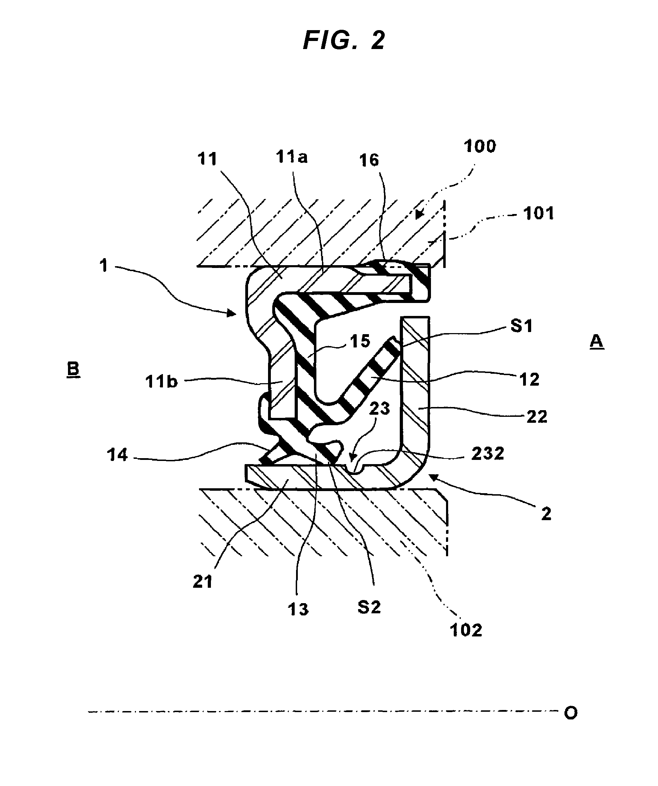

Next, Fig. 2 is a half cross sectional view illustrating a second embodiment of the sealing device in accordance with the present invention by cutting along a plane passing through an axis O.

In this second embodiment, a difference from the first embodiment described previously exists in a point that the dam 23 formed in the outer peripheral surface of the sleeve 21 in the slinger 2 so as to be positioned more on the flange 22 side than the intimate contact slide section S2 of the radial lip 13 is configured by a groove 232 which is continuous in the circumferential direction. Since the other portions are basically configured in the same manner as Fig. 1, an overlapping description will be omitted.

The sealing device in accordance with the second embodiment configured as mentioned above is structured such as to achieve the similar operations and effects to the first embodiment. In other words, the dust, the muddy water, etc. slightly passing from the intimate contact slide section S1 between the flange 22 and the thrust lip 12 to the inner peripheral side thereof is dammed by the dam 23 configured by the groove 232 which is continuous in the circumferential direction, before reaching the intimate contact slide section S2 between the sleeve 21 and the radial lip 13, and is discharged from the intimate contact slide section S1 of the thrust lip 12 to the outer peripheral side thereof, by the throw off effect caused by the centrifugal force of the flange 22. Thus, it is possible to inhibit the dust, the muddy water, etc. from intervening the intimate contact slide section S2 between the sleeve 21 and the radial lip 13. Further, it is possible to effectively prevent an early abrasion of an inner peripheral surface of the radial lip 13 and an outer peripheral surface of the sleeve 21 peripherally provided therein, and a deterioration of a sealing performance caused thereby.

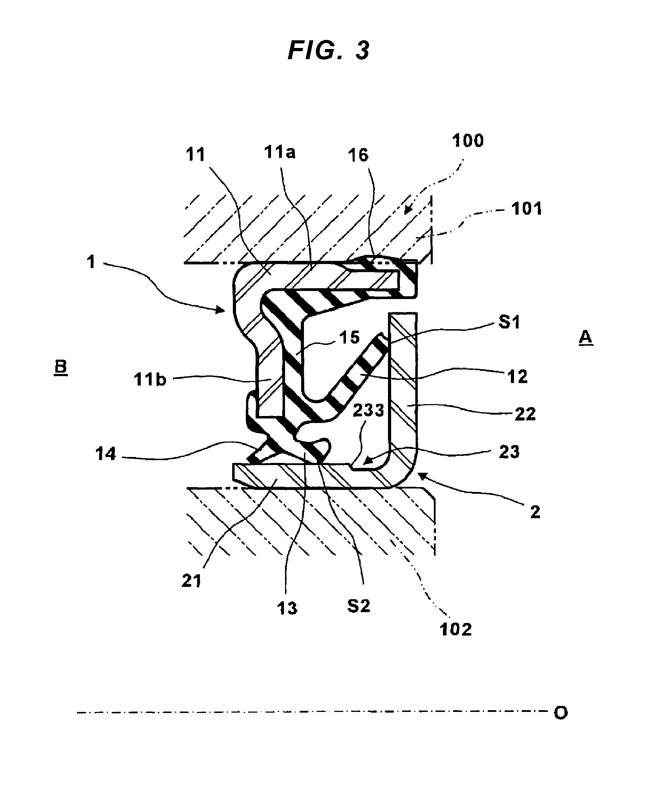

Further, Fig. 3 is a half cross sectional view illustrating a third embodiment of the sealing device in accordance with the present invention by cutting along a plane passing through an axis O.

In this third embodiment, a difference from the first embodiment described previously exists in a point that the dam 23 formed in the outer peripheral surface of the sleeve 21 in the slinger 2 so as to be positioned more on the flange 22 side than the intimate contact slide section S2 of the radial lip 13 is configured by a step 233 which is continuous in the circumferential direction. In other words, the step 233 is formed in such a manner as to become relatively higher in a diametrical direction on the intimate contact slide section S2 side of the radial lip 13. Sincehe other portions are basically configured in the same manner as Fig. 1, an overlapping description will be omitted.

The sealing device in accordance with the third embodiment configured as mentioned above is structured such as to achieve the similar operations and effects to the first embodiment. In other words, the dust, the muddy water, etc. slightly passing from the intimate contact slide section S1 between the flange 22 and the thrust lip 12 to the inner peripheral side thereof is dammed by the dam 23 configured by the step 233 which is continuous in the circumferential direction, before reaching the intimate contact slide section S2 between the sleeve 21 and the radial lip 13, and is discharged from the intimate contact slide section S1 of the thrust lip 12 to the outer peripheral side thereof,by the throw off effect caused by the centrifugal force of the flange 22. Thus, it is possible to inhibit the dust, the muddy water, etc. from intervening the intimate contact slide section S2 between the sleeve 21 and the radial lip 13. Further, it is possible to effectively prevent an early abrasion of an inner peripheral surface of the radial lip 13 and an outer peripheral surface of the sleeve 21 peripherally provided therein, and a deterioration of a sealing performance caused thereby.

In this case, the groove 232 in the second embodiment illustrated in Fig. 2 and the step 233 illustrated in Fig. 3 may be configured as a guide for facilitating a bending work between the sleeve 21 and the flange 22 at a time of press working the slinger 2, by forming more on the flange 22 side than an illustrated position.

## Claims

1. A sealing device comprising:
a stationary sealing element comprising a thrust lip and a radial lip on a inner peripheral side of the thrust lip and attached to a stationary member;
a slinger comprising a sleeve fitted to a rotary member and a flange extending from one end of the slinger;
wherein the thrust lip being made to be in intimate slidable contact with the flange, and
the radial lip being made to be in intimate contact with an outer peripheral surface of said sleeve,
the sealing device further comprising:
a dam being provided on an outer peripheral surface of the sleeve,
wherein the dam is positioned more on the flange side than an intimate contact slide section of the radial lip, and is continuous in a circumferential direction.

2. A sealing device according to claim 1, wherein the dam is configured by a ridge.

3. A sealing device according to claim 1, wherein the dam is configured by a groove.

4. A sealing device according to claim 1, wherein the dam is configured by a step being relatively higher in a diametrical direction on an intimate contact slide section side of the radial lip.
